Europäisches Patentamt

European Patent Office

Office européen des brevets

(19)

(11) **EP 1 316 789 A1**

(12) **EUROPÄISCHE PATENTANMELDUNG**

(43) Veröffentlichungstag:
**04.06.2003 Patentblatt 2003/23**

(51) Int Cl.⁷: **G01M 11/00**

(21) Anmeldenummer: **01128393.4**

(22) Anmeldetag: **03.12.2001**

(84) Benannte Vertragsstaaten:
**AT BE CH CY DE DK ES FI FR GB GR IE IT LI LU
MC NL PT SE TR**
Benannte Erstreckungsstaaten:
**AL LT LV MK RO SI**

(71) Anmelder: **Universität Stuttgart**
**70174 Stuttgart (DE)**

(72) Erfinder: **Reichelt, Stephan**
**70771 Leinfelden-Echterdingen (DE)**

(74) Vertreter: **Gagel, Roland, Dr.**
**Patentanwalt Dr. Roland Gagel,**
**Landsberger Strasse 480a**
**81241 München (DE)**

(54) **Kalibrierung eines diffraktiven Kompensations- oder Absolutnormal-Elementes ( twin oder dual CGH ) über Wellenfrontfehler der sphärischen Hilfswelle**

(57) Die vorliegende Erfindung betrifft ein Verfahren zur Kalibrierung eines diffraktiven Kompensations- oder Absolutnormal-Elementes für eine interferometrische Absolutprüfung asphärischer Oberflächen, bei dem ein komplex kodiertes computergeneriertes Hologramm (11, 12), das sowohl eine asphärische Welle, die für eine interferometrische Vermessung der zu prüfenden asphärischen Oberfläche (8) oder Wellenfront geeignet ist, als auch eine sphärische Hilfswelle rekonstruiert, als Kompensations- bzw. Absolutnormal-Element bereitgestellt und auf Basis der sphärischen Hilfswelle interferometrisch vermessen wird, um durch das computergenerierte Hologramm (11, 12) hervorgerufene Wellenfrontfehler der sphärischen Hilfswelle zu bestimmen. Das Verfahren zeichnet sich dadurch aus, dass aus den durch das computergenerierte Hologramm (11, 12) hervorgerufenen Wellenfrontfehlern der sphärischen Hilfswelle Positionierungsfehler eines Schreibstrahls bei der Herstellung des computergenerierten Hologrammes (11, 12) ermittelt und aus den Positionierungsfehlern die zu erwartenden Wellenfrontfehler der asphärischen Welle berechnet und als Kalibrierung herangezogen werden.

Mit dem vorliegenden Verfahren lässt sich eine vollständige interferometrische Absolutprüfung asphärischer Oberflächen erreichen.

Fig. 3

EP 1 316 789 A1

## Beschreibung

### Technisches Anwendungsgebiet

Die vorliegende Erfindung betrifft ein Verfahren zur Kalibrierung eines diffraktiven Kompensations- oder Absolutnormal-Elementes für eine interferometrische Absolutprüfung asphärischer Oberflächen, bei dem ein komplex kodiertes computergeneriertes Hologramm, das sowohl eine asphärische Welle, die für eine interferometrische Vermessung der zu prüfenden asphärischen Oberfläche oder Wellenfront geeignet ist, als auch eine sphärische Hilfswelle rekonstruiert, als Kompensations- bzw. Absolutnormal-Element bereitgestellt und auf Basis der sphärischen Hilfswelle interferometrisch vermessen wird, um durch das computergenerierte Hologramm hervorgerufene Wellenfrontfehler der sphärischen Hilfswelle zu bestimmen.

Die Vermessung sphärischer oder asphärischer Oberflächen, insbesondere von Linsen oder Spiegeln, spielt im Bereich der Optik eine wichtige Rolle. Die Fertigungsgenauigkeit und Qualitätssicherung derartiger optischer Komponenten hängt von der Genauigkeit ab, mit der eine Abweichung der sphärischen oder asphärischen Oberfläche von einer Solloberfläche bestimmt werden kann.

Für die Vermessung sphärischer Oberflächen hat sich die interferometrische Prüfung etabliert, bei der die sphärische Oberfläche zusammen mit einem Kompensationselement in den Messarm eines Interferometers eingesetzt und in unterschiedlichen Positionen und/oder Stellungen vermessen wird. Das Kompensationselement erzeugt eine sphärische Ausgangswelle des Interferometers, die beim Auftreffen auf die zu vermessende sphärische Oberfläche vollständig in sich zurück reflektiert wird. Bei geeigneter Anordnung der zu vermessenden sphärischen Oberfläche an verschiedenen Positionen und in verschiedenen Stellungen lassen sich die durch das Interferometer, das Kompensationselement und die sphärische Oberfläche hervorgerufenen Wellenfrontfehler unabhängig voneinander bestimmen, so dass die sphärische Oberfläche absolut vermessen werden kann.

Ein derartiges Verfahren zur vollständigen interferometrischen Absolutprüfung von sphärischen Oberflächen ist für asphärische Oberflächen bisher nicht bekannt.

### Stand der Technik

Die Vermessung asphärischer Oberflächen erfolgt nach dem gleichen Prinzip wie die interferometrische Vermessung sphärischer Oberflächen. Durch Einsatz eines entsprechenden Kompensationselementes im Messarm des Interferometers wird eine Welle mit einer asphärischen Wellenfront erzeugt, die bei Auftreffen auf die zu vermessende asphärische Oberfläche in sich zurück reflektiert wird. Während bei der Vermessung sphärischer Oberflächen jedoch die durch das Kompensationselement und die Komponenten des Interferometers hervorgerufenen Wellenfrontfehler getrennt von den durch die zu vermessende sphärische Oberfläche hervorgerufenen Wellenfrontfehlern bestimmt werden können, ist eine derartige Trennung der einzelnen Fehlerbeiträge zu mit dem Interferometer gemessenen Gesamt-Wellenfrontfehlern bei der Vermessung von asphärischen Oberflächen bisher nicht vollständig möglich.

Ein Verfahren, mit dem nicht rotationssymmetrische Fehleranteile der asphärischen Oberfläche interferometrisch bestimmt werden können, ist aus R. Freimann et al., "Absolute measurement of non-comatic aspheric surface errors", Optics Communications, Vol. 161, pages 106 to 114, 1999 bekannt. Dieses interferometrische Verfahren beruht auf einem Drehstellungstest. Dabei wird der asphärische Prüfling unter N verschiedenen Drehwinkeln interferometrisch geprüft. Als Ergebnis der Auswerteprozedur werden alle nicht rotationssymmetrischen Fehler des Prüflings in absoluter Weise erhalten, die kein ganzzahliges Vielfaches von N sind. Um die rotationssymmetrischen Fehler der asphärischen Oberfläche zu ermitteln, muss jedoch auf taktile Verfahren zurückgegriffen oder mit verschiedenen Messmethoden ein so genannter "Cross check" durchgeführt werden, um so die verbleibenden Restunsicherheiten zu minimieren. Eine vollständige interferometrische Absolutprüfung ist somit mit diesem Verfahren nicht möglich.

Weiterhin ist aus der DE 198 22 453 A1 sowie der inhaltsgleichen DE 198 20 785 A1 ein Verfahren zur Quasi-Absolutprüfung von asphärischen Oberflächen unter Zuhilfenahme von diffraktiven Normalelementen und planen sowie sphärischen Referenzflächen bekannt, bei dem ebenfalls eine interferometrische Prüfung der asphärischen Oberflächen durchgeführt wird. Bei diesem Verfahren wird als Kompensationselement im Messarm des Interferometers ein komplex kodiertes computergeneriertes Hologramm bereitgestellt, das sowohl eine asphärische Welle, die für eine interferometrische Vermessung der zu prüfenden asphärischen Oberfläche geeignet ist, als auch eine sphärische Hilfswelle rekonstruiert, und auf Basis der sphärischen Hilfswelle interferometrisch vermessen, um durch das computergenerierte Hologramm hervorgerufene Wellenfrontfehler der sphärischen Hilfswelle zu bestimmen. Die sphärische Hilfswelle wird hierbei als so genanntes Off-axis computergeneriertes Hologramm, die asphärische Prüfwelle als so genanntes Inline computergeneriertes Hologramm erzeugt. Die Kalibrierung des Interferometers sowie des computergenerierten Hologrammes erfolgt bei dieser Druckschrift zunächst auf Basis der sphärischen Hilfswelle mit dem bekannten für die Vermessung sphärischer Oberflächen eingesetzten Dreistellungstest. Durch diese Vermessung können die Wellenfrontfehler ermittelt werden, die durch das computergenerierte Hologramm in der sphärischen Hilfswelle hervorgerufen werden. Bei dem Verfahren der Druckschrift wird die Annahme gemacht, dass die Wellenfrontfehler für die sphärische Hilfswelle und die asphärische Prüfwelle gleich groß sind, so dass durch die Kalibrierung mit Hilfe der sphärischen Hilfswelle auch gleichzeitig die Kalibrierung für die asphärische Prüfwelle erhalten wird. Diese Näherung ist jedoch nur dann zulässig, wenn die asphärische Welle nur geringfügig von der sphärischen Welle abweicht. Durch den Off-axis Charakter der sphärischen Hilfswelle wird das Problem bei dem Verfahren dieser Druckschrift zusätzlich verschärft.

Ausgehend von diesem bekannten Stand der Technik besteht die Aufgabe der vorliegenden Erfindung darin, ein Verfahren zur exakten Kalibrierung eines diffraktiven Kompensations- oder Absolutnormal-Elementes anzugeben, das eine vollständige interferometrische Absolutprüfung asphärischer Oberflächen ermöglicht.

**Darstellung der Erfindung**

Die Aufgabe wird mit dem Verfahren gemäß Patentanspruch 1 gelöst. Vorteilhafte Ausgestaltungen und Weiterbildungen des Verfahrens sind Gegenstand der Unteransprüche.

Bei dem vorliegenden Verfahren wird ein komplex kodiertes computergeneriertes Hologramm, das sowohl eine asphärische Welle, die für eine interferometrische Vermessung der zu prüfenden asphärischen Oberfläche oder Wellenfront geeignet ist, als auch eine sphärische Hilfswelle rekonstruiert, als diffraktives Kompensations- oder Absolutnormal-Element bereitgestellt und auf Basis der sphärischen Hilfswelle interferometrisch vermessen, um durch das computergenerierte Hologramm hervorgerufene Wellenfrontfehler der sphärischen Hilfswelle zu bestimmen. Aus den durch dieses computergenerierte Hologramm hervorgerufenen Wellenfrontfehlern der sphärischen Hilfswelle werden Positionierungsfehler eines Schreibstrahls bei der Herstellung des computergenerierten Hologramms ermittelt und aus den Positionierungsfehlern die zu erwartenden Wellenfrontfehler der asphärischen Welle berechnet und als Kalibrierung des diffraktiven Kompensations- bzw. Absolutnormal-Elementes herangezogen. Unter Wellenfrontfehlern sind hierbei Abweichungen der erzeugten Wellenfront von einer vorgegebenen (Soll-)Wellenfront zu verstehen, die in der Literatur auch als Wellenfrontaberration oder Wellenfrontverzeichnung bezeichnet werden.

Das auf diese Weise kalibrierte komplex kodierte computergenerierte Hologramm, im Folgenden abgekürzt auch als Twin-CGH bezeichnet, kann in einer Weiterbildung des vorliegenden Verfahrens direkt als Kompensationselement in dem Messarm eines Interferometers eingesetzt werden, um die asphärische Oberfläche zu vermessen. In einer weiteren Anwendung wird das kalibrierte Twin-CGH als Absolutnormal-Element für die Kalibrierung anderer Kompensationselemente bzw. interferometrischer Prüfanordnungen eingesetzt. Da die durch das Twin-CGH hervorgerufenen Wellenfrontfehler bei Anwendung des vorliegenden Verfahrens absolut bekannt sind, kann auf diese Weise jede interferometrische Prüfanordnung sowie jedes Kompensationselement für die zugehörige asphärische Oberfläche wiederum absolut kalibriert werden.

Das Prinzip eines Zwei- oder Mehrfachhologramms ist aus der Literatur bekannt. A. F. Fercher realisierte in "Computer-generated holograms for testing optical elements: Error analysis and error compensation", Optica Acta, vol. 23 No. 5, 347-365, 1976 ein Doppelhologramm, indem die Hologrammapertur in alternierende Streifen geteilt wurde, die abwechselnd die Hologrammstrukturen enthalten, die zur Erzeugung zweier unterschiedlicher Wellen erforderlich sind. T. Yatagai et al. verwenden in "Dual computer-generated holograms for testing aspheric surfaces", Optica Acta, vol. 26, No. 8, 985-993, 1979 die Lohmann-Kodierungsmethode, um mit einem Doppelhologramm die Summen und Differenzen zweier Wellenfronten zu rekonstruieren.

Das Prinzip der Generierung eines komplex kodierten Hologrammes beruht auf der kohärenten Überlagerung zweier Wellen mit den Amplituden $A_1$, $A_2$ und den Phasen $\phi 1$, $\phi 2$. Aus dieser Überlagerung ergibt sich für das Gesamtfeld

$$U_R = U_1 + U_2 = A_1 e^{i\phi 1} + A_2 e^{i\phi 2},$$

wobei die komplexe Amplitude $A_R$ des resultierenden Feldes mit

$$A_R = [(\text{Re}\{U_R\})^2 + (\text{Im}\{U_R\})^2]^{1/2}$$

und die Phase $\phi_R$ des resultierenden Feldes mit

$$\phi_R = \arctan\left[\frac{\text{Im}\{U_R\}}{\text{Re}\{U_R\}}\right]$$

gegeben sind.

Das Hologrammmuster des computer-generierten Hologramms (CGH) erhält man durch die Binarisierung der komplexen Phasenfunktion $\phi_R$. Dieses binäre Muster wird durch geeignete Schreibgeräte für diffraktive optische Elemente, beispielsweise Elektronenstrahl- oder Laserschreibsysteme vergegenständlicht. Eine beispielhafte Herstellungstechnik für CGHs ist in A.G. Poleshchuk et al., "Polar coordinate laser pattern generator for fabrication of diffractive optical elements with arbitrary structure", Applied Optics Vol. 38, No. 8, pages 1295 - 1301, 1999 beschrieben.

Die lokale Gitterperiode p eines computer-generierten Hologramms (CGH), welches nur eine Wellenfront rekonstruiert, ist durch

$$p = \frac{2\pi m_D}{d\phi/dr} = \frac{\lambda_0 m_D}{dGo/dr}$$

gegeben. Dabei sind $m_D$ die Design-Beugungsordnung für die Phasenfunktion $\phi$ bzw. das Aufzeichnungseikonal $G_0$ sowie $\lambda_0$ die Design-Wellenlänge des CGHs. Der Wellenfrontfehler $W_{PD}$, der durch eine Verzeichnung des Hologrammmusters entsteht, beträgt

$$W_{PD} = -m_R\lambda_0\ \zeta/p$$

Wobei mit $m_R$ die Rekonstruktions-Beugungsordnung und mit $\zeta$ der Fehler durch Hologrammmusterverzeichnung lateral zu den Zonen bezeichnet sind. Aus den vorangegangenen Gleichungen ergibt sich

$$W_{PD_{m_R}} = -\frac{m_R{}^{`}}{m_D}\zeta\frac{dG_0}{dr}$$

Der Wellenfrontfehler $W_{PD}$ ist direkt proportional zum Gradienten des Aufzeichnungseikonals des CGHs. Die Hologrammmusterverzeichnung $\zeta$ des CGHs stellt nichts anderes als einen Positionierungsfehler des Schreibstrahls, d.h. des Elektronen- oder Laserstrahls, während der Fertigung des CGHs dar.

Beim vorliegenden Verfahren wird ein komplex kodiertes computergeneriertes Hologramm (Twin-CGH) bereitgestellt, welches sowohl eine asphärische als auch eine sphärische Hilfswelle rekonstruiert, die zur Absolutkalibrierung dieses Twin-CGHs genutzt wird. Bei dem Verfahren wird erfindungsgemäß ausgenutzt, dass bei komplexer Kodierung zweier Aufzeichnungseikonale $G_{01}$ und $G_{02}$ der Positionierungsfehler des Schreibstrahls bei der Herstellung des Twin-CGHs auf beide Wellen aufgeprägt wird, d.h. dass $\zeta$ für beide Wellen gleich ist. Damit ergeben sich unterschiedliche Wellenfrontfehler, je nach dem, in welchem Modus - dem sphärischen oder dem asphärischen Modus - das Twin-CGH betrieben wird.

$$W_{PD_1} = -\frac{m_{R1}}{m_{D1}}\zeta\frac{dG_{01}}{dr}$$

$$W_{PD_2} = -\frac{m_{R2}}{m_{D2}}\zeta\frac{dG_{02}}{dr}$$

Wenn eine der beiden Wellenfronten, die durch das Twin-CGH rekonstruiert werden, absolut vermessen werden kann, kann somit der Fehler der zweiten Wellenfront berechnet werden. Beim vorliegenden Verfahren wird der durch das Twin-CGH hervorgerufene Wellenfrontfehler der sphärischen Hilfswelle absolut bestimmt, so dass daraus der Positionierungsfehler des Schreibstrahls bei der Herstellung des Twin-CGHs ermittelt und aus dem Positionierungsfehler die zu erwartenden Wellenfrontfehler der asphärischen Welle mit den oben angegebenen Gleichungen berechnet werden können. Für den absolut bestimmten Positionierungsfehler $\zeta$ ergibt sich dabei

$$\zeta = -W_{PD1}\frac{m_{D1}}{m_{R1}}\frac{1}{dG_{01}/dr}$$

Der zu erwartende Wellenfrontfehler durch Hologrammmusterverzeichnung $W_{PD2}$ der asphärischen Welle des CGHs ergibt sich somit zu

$$W_{PD2} = W_{PD1} \frac{m_{D1} m_{R2}}{m_{D2} m_{R1}} \frac{dG_{02}/dr}{dG_{01}/dr} \tag{1}$$

Bei Einsatz eines geeigneten diffraktiven Absolutkalibrierverfahrens für die sphärische Hilfswelle, wie es beispielsweise den Ausführungsbeispielen zu entnehmen ist, wird auch der Passfehler des CGH-Substrates absolut bestimmt. Dieser Passfehler $W_{PASS}$ bezieht sich auf die Strahlrichtung, wobei $\alpha$ der Winkel zwischen Strahlrichtung und Substratnormalen ist. Der Wellenfront-Passfehler $W_{SF}$ in Normalenrichtung ist daher

$$W_{SF} = W_{PASS1} \cos \alpha_1 = W_{PASS2} \cos \alpha_2,$$

woraus sich der Passfehler in Strahlrichtung $W_{PASS2}$ der asphärischen Welle des Twin-CGH zu

$$W_{Pass2} = W_{Pass1} \frac{\cos \alpha_1}{\cos \alpha_2}$$

ergibt.

Der Gesamtfehler der asphärischen Welle $W_{CGH2}$ des Twin-CGH ergibt sich dann aus der Summe des Fehlers durch Hologrammverzeichnung $W_{PD2}$ und des Passfehlers $W_{PASS2}$ des Substrates in Strahlrichtung:

$$W_{CGH2} = W_{PD1} \frac{m_{D1} m_{R2}}{m_{D2} m_{R1}} \frac{dG_{02}/dr}{dG_{01}/dr} + W_{Pass1} \frac{\cos \alpha_1}{\cos \alpha_2}$$

Zur Vermeidung von Störinterferenzen im Interferogramm sollte bei der Bereitstellung des computer- generierten Hologramms darauf geachtet werden, dass die Gradienten der beiden Einzel-Aufzeichnungseikonale $G_{01}$ und $G_{02}$ lokal nicht gleich groß sind.

Das vorliegende Verfahren ermöglicht die vollständige interferometrische Absolutprüfung asphärischer Oberflächen, so dass sowohl die nicht rotationssymmetrischen als auch die rotationssymmetrischen Asphährenfehler als absolutes Messergebnis geliefert werden. Mit dem vorliegenden Verfahren können Asphären bzw. asphärische Oberflächen mit den gleichen Genauigkeiten wie sphärische Flächen absolut interferometrisch vermessen werden. Somit wird die Lücke geschlossen, die momentan noch zwischen Optikfertigung und Messtechnik besteht, denn nur bei genauer Kenntnis der Oberflächenfehler der gefertigten asphärischen Oberfläche kann eine Nachpolitur der Asphäre erfolgen.

Das komplex kodierte computergenerierte Hologramm kann beim vorliegenden Verfahren sowohl in Reflexion als auch in Transmission interferometrisch vermessen und eingesetzt werden, wie dies aus den Ausführungsbeispielen ersichtlich ist. Weiterhin kann es von Vorteil sein, das komplex kodierte computergenerierte Hologramm in einer Ausführungsform mit einer reflektierenden Rückfläche auszugestalten, so dass es für einen doppelten Durchgang ausgebildet ist. Auf diese Weise lässt sich die Liniendichte des Hologrammes für die jeweilige Anwendung halbieren.

Weiterhin ist es selbstverständlich möglich, das komplex kodierte computergenerierte Hologramm für eine Rekonstruktion nicht in der ± 1. Beugungsordnung, sondern in einer höheren ± m. Beugungsordnung auszubilden. Auch dies reduziert die erforderliche Liniendichte im Twin-CGH.

Das komplex kodierte Hologramm kann als reines inline bzw. off-axis Hologramm oder als eine Kombination beider Hologrammtypen ausgebildet sein.

Durch die interferometrische Absolutkalibrierung des diffraktiven komplex kodierten computergenerierten Hologrammes wird ein asphärisches diffraktives Absolutnormal geschaffen, mit dem bei Einsatz des Twin-CGHs in Reflexion wiederum ein interferometrischer Nulltest-Aufbau absolut kalibriert werden kann. Das Twin-CGH wird in diesem Fall anstelle des asphärischen Prüflings in das Interferometer eingesetzt. Auf diese Art lassen sich refraktive, diffraktive und hybride Kompensationssysteme in absoluter Weise kalibrieren. Da somit alle Aberrationen des Interferometers inklusive derer des Kompensationssystems bestimmt werden können, lassen sich die Wellenfrontfehler bzw. Aberrationen der zu prüfenden Asphäre direkt aus einer Einzelmessung ableiten.

In einer weiteren Anwendung wird das Twin-CGH in Transmission betrieben und in doppeltem Durchgang im Messarm eines Interferometers eingesetzt, um ein rein diffraktives Kompensationssystem in absoluter Weise zu kalibrieren. Nach der Durchführung der Kalibriermessungen erfolgt die eigentliche Messung mit der zu prüfenden Asphäre, bei der das nun kalibrierte Twin-CGH im Null-Modus betrieben wird. Da zu diesem Zeitpunkt alle Beiträge der gemessenen Wellenfrontfehler bekannt sind, kann der Wellenfront-Oberflächenfehler der Asphäre in absoluter Weise angegeben werden.

## Kurze Beschreibung der Zeichnungen

Das vorliegende Verfahren wird nachfolgend ohne Beschränkung des allgemeinen Erfindungsgedankens anhand von Ausführungsbeispielen in Verbindung mit den Zeichnungen nochmals kurz erläutert. Hierbei zeigen:

Fig. 1    ein Beispiel eines interferometrischen Aufbaus für die interferometrische Absolutprüfung von Asphären;

Fig. 2    verschiedene Messschritte eines Ausführungsbeispiels des vorliegenden Verfahrens;

Fig. 3    verschiedene Messschritte eines weiteren Ausführungsbeispiels des vorliegenden Verfahrens;

Fig. 4    schematisch fünf Messungen für die Kalibrierung der Zonenplatte gemäß Fig. 3a; und

Fig. 5    ein Beispiel für den prinzipiellen Aufbau eines CGHs als Phasenhologramm mit reflektierender Rückfläche.

## Wege zur Ausführung der Erfindung

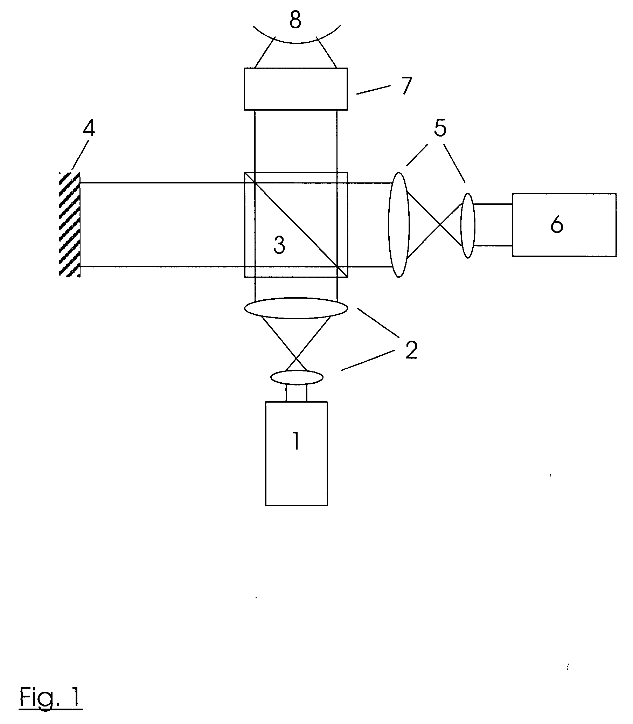

Fig. 1 zeigt einen typischen interferometrischen Aufbau zur Prüfung sphärischer oder asphärischer Oberflächen. Das in der Figur dargestellte Interferometer setzt sich aus einem Laser 1 mit einer Strahlaufweitungsoptik 2, einem Strahlteiler 3, einem Referenzplanspiegel 4, einer Teleskopoptik 5 sowie einer CCD-Kamera 6 zusammen. Im Messarm des Interferometers ist ein Kompensationselement 7 eingesetzt, das die vom Strahlteiler 3 kommende ebene Welle in die entsprechende sphärische oder asphärische Prüfwelle umformt, die auf die zu prüfende Oberfläche 8 auftrifft. Die durch interferometrische Überlagerung der vom Referenzarm und Messarm zurückkommenden Strahlung auftretende Interferenz wird mit der CCD-Kamera 6 aufgezeichnet. Aus der Intensitätsverteilung auf der Sensorfläche der CCD-Kamera 6 lassen sich Wellenfrontfehler dieses interferometrischen Prüfaufbaus ortsaufgelöst bestimmen. Das Kompensationselement 7 kann hierbei ein refraktives, diffraktives oder hybrides Kompensationssystem sein.

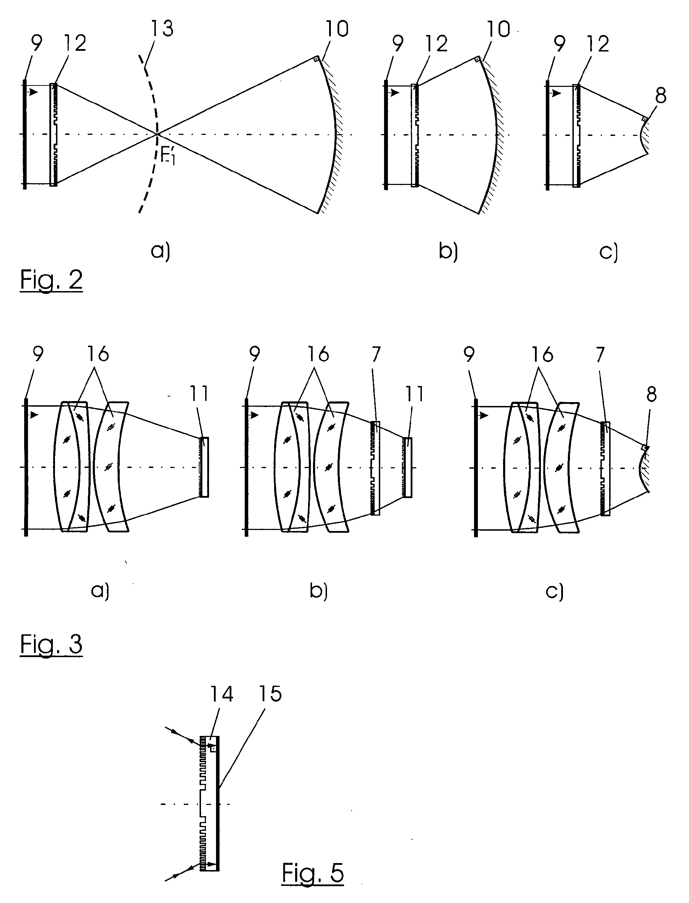

Fig. 2 zeigt einzelne Schritte eines beispielhaften Verfahrensablaufes zur Absolutkalibrierung eines diffraktiven Kompensationssystems. Dieses wird im vorliegenden Ausführungsbeispiel als komplex kodiertes computergeneriertes Hologramm 12 in doppeltem Durchgang eingesetzt. Das Twin-CGH 12 rekonstruiert eine asphärische Prüfwelle zur Prüfung der entsprechenden Asphären sowie eine sphärische Hilfswelle zur Kalibrierung des Twin-CGHs 12. Das Twin-CGH 12 wird dabei im parallelen Strahlengang eines Interferometers eingesetzt, wobei die strukturierte Fläche in Richtung der zu prüfenden Asphäre 8 zeigt. Mit Bezugszeichen 9 ist hierbei die vom Strahlteiler 3 eintreffende ebene Wellenfront bezeichnet, die auf das Twin-CGH 12 auftrifft. Die Prüfanordnung ist so ausgelegt, dass die ebene Welle 9 im Messarm des Interferometers durch das Twin-CGH 12 in eine sphärische Hilfswelle und die asphärische Prüfwelle umgeformt wird. Insgesamt werden bei der Kalibrierprozedur fünf Messungen benötigt, um die Aberrationen des Interferometers inklusive derer des Twin-CGHs 12 von denen der zu prüfenden Asphäre 8 zu trennen.

Zunächst wird der bekannte Dreistellungstest nach Jensen ("Absolute calibration method for laser twyman-Green wave-front testing interferometers", Journal of the Optical Society of America, 63(10), 1313, 1973) durchgeführt, wobei ein konkaver sphärischer Spiegel 10 absolut vermessen wird. Das Twin-CGH 12 wird dabei als Fresnelsche Zonenlinse (FZL-Modus) betrieben, die in der -1. Beugungsordnung ($m_R = -1$) eine konvergente Kugelwelle erzeugt. Eine notwendige Voraussetzung ist, dass der Radius $R_M$ des Kugelspiegels größer als die primäre Brennweite der Zonenlinse $f'_{-1}$ ist ($R_M > f'_{-1}$). Die erste und zweite Messung erfolgen derart, dass der Krümmungsmittelpunkt des Kugelspiegels 10 mit dem Fokus $F'_{-1}$ der Zonenlinse (Twin-CGH 12) zusammenfällt (konfokale Position). Nach der ersten Messung erfolgt eine Drehung des Kugelspiegels 10 um 180° um seine Symmetrieachse. Beide Messungen erfolgen extrafokal bezüglich dem Fokus der Zonenlinse in der -1. Beugungsordnung. Die dritte Messung erfolgt mit dem Scheitel des Kugelspiegels 10 im Fokus $F'_{-1}$ der Zonenlinse, in der so genannten Katzenaugenposition (in der Fig. 2a mit der gestrichelten Linie 13 angedeutet). Mit $W_R$ als der Aberration der Optik im Referenzarm, $W_{PASS} + W_{PD1/-1}$ als der Aberration der Optik im Messarm, ausschließlich der des Kugelspiegels $W_M$, ergeben sich für die drei Messungen

$$W_1 = W^0_{Mef} + W^0_R + W^0_{PASS} + W^0_{PD1/-1}$$

$$W_2 = W^{\Pi}_{Mef} + W^0_{\phantom{R}R} + W^0_{PASS} + W^0_{PD1/-1}$$

$$W_3 = W^0_R + \tfrac{1}{2}\,(W^0_{PASS} + W^0_{PD1/-1} + W^{\Pi}_{PASS} + W^{\Pi}_{PD1/-1}),$$

wobei mit $W_{PASS}$ die Aberrationen durch Substratoberflächenfehler des CGH-Trägers und mit $W_{PD1/-1}$ die Aberrationen durch Hologrammverzeichnung der Zonenlinse in der -1. Beugungsordnung bezeichnet sind. Dieses Gleichungssystem kann nach den Aberrationen des Kugelspiegels $W^0_{Mef}$ aufgelöst werden:

$$W^0_{Mef} = \frac{1}{2}\,(W_1 + \overline{W}_2 - W_3 - \overline{W}_3)$$

wobei der Querbalken auf eine Rotation der Wellenfront um 180° hinweist. Die tiefgestellten Indizes ef und if beziehen sich auf die Lage des Kugelspiegels 10 zum Fokus der -1. Beugungsordnung des im FZL-Modus betriebenen Twin-CGHs 12. Die Superskripte 0 und $\pi$ bezeichnen die azimutale Orientierung des Kugelspiegels 10 relativ zum Interferometer. Weiterhin liefert dieser Absoluttest den systematischen Interferometerfehler $W_R + W_{PASS} + W_{PD1/-1}$:

$$W^0_{\phantom{R}R} + W^0_{\phantom{PASS}PASS} + W^0_{\phantom{PD1/-1}PD1/-1} = \frac{1}{2}\,(W_1 + W_2 - \overline{W}_1 - \overline{W}_2) + \frac{1}{2}\,(W_3 + \overline{W}_3)$$

In einem nächsten Schritt der Messprozedur wird der Kugelspiegel 10 entlang der optischen Achse in Richtung der Zonenlinse 12 in eine zweite konfokale Position des Kugelspiegels bei $\Delta z = -2f'_{-1}$ verschoben, bei der der Krümmungsmittelpunkt mit dem virtuellen Fokus der +1. Beugungsordnung ($m_R = +1$) der Zonenlinse (Twin-CGH 12) zusammenfällt (vgl. Fig. 2b). Die vierte Messung bei dieser Position ergibt:

$$W_4 = W^0_{Mif} + W^0_R + W^0_{PASS} + W^0_{PD1/+1}$$

Hier wird nun eine divergente Kugelwelle durch die Zonenlinse rekonstruiert. Das Vorzeichen des Wellenfrontfehlers durch Hologrammverzeichnung kehrt sich um, wenn die Wellenfront in ihrer komplementären Beugungsordnung rekonstruiert wird:

$$W_{PD1/-1} = -W_{PD1/+1}.$$

Daneben tritt in dieser 4. Messposition eine abbildungsbedingte Drehung der Beiträge der Aberrationen des Kugelspiegels 10 auf, es gilt:

$$W^0_{Mif} = W^{\Pi}_{Mef}.$$

Wenn man einen kleinen Oberflächenfehler der strukturierten Twin-CGH-Oberfläche sowie relativ kleine Ablenkwinkel des gebeugten Strahls annimmt, dann ist dieser Beitrag zum Fehler $W_{PASS}$ unabhängig von der Richtung des gebeugten Strahls. Somit kann der Wellenfrontfehler durch Hologrammverzeichnung $W_{PD1}$ separiert werden, wenn die obigen Gleichungen für $W_4$ und $W^0_R + W^0_{PASS} + W^0_{PD1/-1}$ voneinander subtrahiert und die Ausdrücke für $W^0_{Mif}$ und $W_{PD1/-1}$ eingesetzt werden:

$$W_{PD1/-1} = \frac{1}{8}\,(W_1 + 3W_2 + \overline{W}_1 - \overline{W}_2) - \frac{1}{2}\,W_4$$

Die letzte Messung erfolgt mit der zu prüfenden Asphäre 8. Das Twin-CGH 12 wird hierbei im Null-Modus betrieben (Fig. 2c). Es ergibt sich für diese fünfte Messung:

$$W_5 = W^0_R + W^0_{PASS} + W^0_{PD2/-1} + W^0_{ASPH}.$$

Der Wellenfrontfehler $W_{PD2/-1}$ der asphärischen Welle wird hierbei direkt über den Positionierungsfehler des Schreibstrahls durch Gleichung (1) aus $W_{PD1/-1}$ berechnet. Somit sind alle Terme bis auf den Wellenfront-Oberflächenfehler $W_{ASPH}$ bekannt. Damit kann nun der Wellenfront-Oberflächenfehler der Asphäre $W_{ASPH}$ abhängig von den Einzelmessungen und den Designdaten des Twin-CGHs 12 angegeben werden, wobei im beschriebenen Ausführungsbeispiel $m_{D1} = m_{R1} = -1$ und $m_{D2} = m_{R2}$ ist.

$$W^0{}_{ASPH} = W_5 - \frac{1}{2}(W_4 + W_3 + \overline{W}_3) - \frac{1}{8}(W_1 - W_2 - 3\overline{W}_1 - \overline{W}_2) - \ldots$$

$$- \left[\frac{1}{8}(W_1 + 3W_2 + \overline{W}_1 - \overline{W}_2) - \frac{1}{2}W_4\right]\frac{dG_{02}/dr}{dG_{01}/dr}$$

Der Vorteil dieser Ausführungsform des vorliegenden Verfahrens besteht darin, dass einerseits nur fünf Messungen für die Absolutvermessung der Asphäre 8 benötigt werden und andererseits keine Verzeichnungskorrektur der Wellenfrontfehler des Twin-CGHs 12 erforderlich ist, um das Messverfahren zu kalibrieren. Weiterhin kann durch eine geeignete Wahl des Reflexionsgrades des Kugelspiegels 10 der prinzipbedingte Nachteil der verringerten Beugungseffizienz des Twin-CGHs 12 im FZL-Modus (FZL = Fresnelsche Zonenlinse) ausgeglichen werden. Damit können für den FZL- und für den Null-Modus gleiche Kontrastverhältnisse im Interferogramm erzielt werden.

In einer weiteren Ausgestaltung kann das in doppeltem Durchgang eingesetzte Twin-CGH auch als off-axis CGH ausgebildet sein. Die konfokalen Messpositionen des sphärischen Spiegels ergeben sich dann entsprechend den in unterschiedlichen Richtungen verlaufenden optischen Achsen der komplementären Beugungsordnungen der sphärischen Hilfswelle. Eine derartige Ausgestaltung des Twin-CGHs ermöglicht eine vollständige räumliche Trennung der Messwelle von unerwünschten Störordnungen.

Fig. 3 zeigt ein weiteres Ausführungsbeispiel für das vorliegende Verfahren. In diesem Beispiel wird ein komplex kodiertes computergeneriertes Hologramm 11 in Reflexion eingesetzt, um eine absolute Auflichtprüfung von Asphären 8 zu erreichen. Dieses Twin-CGH 11 dient als diffraktives Absolutnormal. Es rekonstruiert zum einen eine sphärische Hilfswelle, die mit den bekannten Methoden absolut kalibriert werden kann (vgl. z. B. S. Reichelt et al., "Absolute interferometric test of Fresnel zone plates", Opt. Comm. Vol. 200(1-6), pp. 107 to 117, 2001). Zum anderen rekonstruiert das Twin-CGH 11 eine asphärische Welle, wobei es dann anstelle des asphärischen Prüflings 8 im Interferometer als diffraktives asphärisches Absolutnormal zur Absolutkalibrierung refraktiver, diffraktiver oder hybrider Kompensationssysteme 7 eingesetzt werden kann. Da somit alle Aberrationen des Interferometers inklusive derer des Kompensationssytems 7 bestimmt werden können, lassen sich die Aberrationen der zu prüfenden Asphäre 8 direkt aus einer Einzelmessung der Asphäre ableiten.

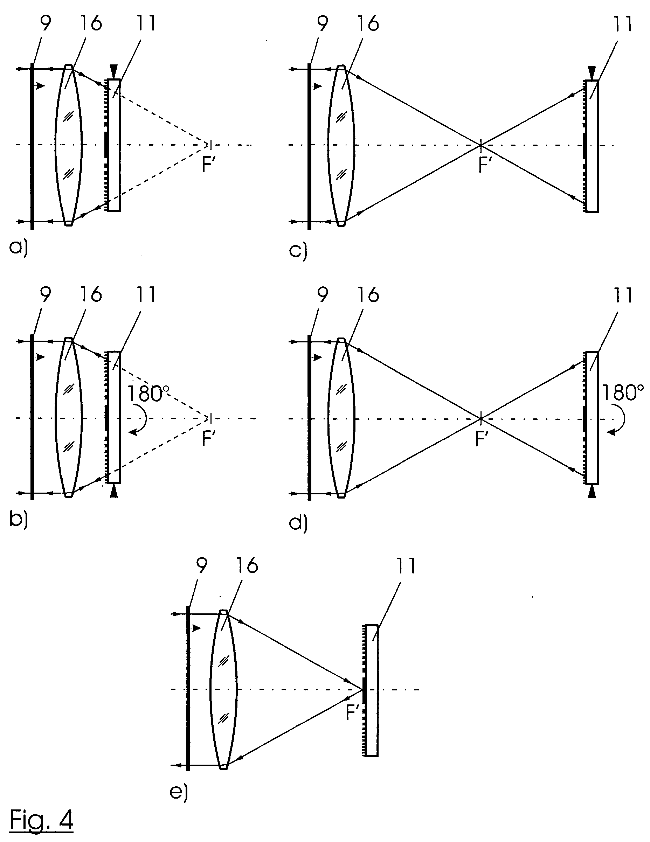

Insgesamt werden für diese Prozedur sieben Messungen benötigt: fünf Messungen zur Kalibrierung der Zonenplatte bzw. des Twin-CGHs 11 (Fig. 3a bzw. Fig. 4a-e), eine Messung mit diffraktivem Absolutnormal (Twin-CGH 11) und eine Messung mit der zu prüfenden Asphäre 8.

Die fünf Messungen (Fig. 3a bzw. Fig. 4a-e) zur Kalibrierung des Twin-CGH 11 ergeben sich aus jeweils zwei Messungen in intrafokaler ($m_R = 1$)

$$W_1 = W^0{}_{if} = W^0{}_{FZMif} + W^0{}_O + W^0{}_R, \qquad \text{(Fig. 4a)}$$

$$W_2 = W^\Pi{}_{if} = W^\Pi{}_{FZMif} + W^0{}_O + W^0{}_R, \qquad \text{(Fig. 4b)}$$

bzw. extrafokaler Position ($m_R = -1$)

$$W_3 = W^0{}_{ef} = W^0{}_{FZMef} + W^0{}_O + W^0{}_R, \qquad \text{(Fig. 4c)}$$

$$W_4 = W^{II}{}_{ef} = W^\Pi{}_{FZMef} + W^0{}_O + W^0{}_R, \qquad \text{(Fig. 4d)}$$

sowie einer Messung in Katzenaugenposition

$$W_5 = W_F = W^0_R + 1/2 \, (W^0_O + W^\Pi_O). \qquad \text{(Fig. 4e)}$$

Mit $W_{FZM}$ seien die Aberrationen der Zonenplatte 11, mit $W_O$ und $W_R$ die des Interferometerobjektivs bzw. der Referenzfläche bezeichnet. $W_{FZM}$ setzt sich aus dem Fehler durch Hologrammverzeichnung $W_{PD}$ und dem Passfehler des Trägersubstrates $W_{PASS}$ zusammen. Die tiefgestellten Indizes if, ef und F beziehen sich dabei auf die Lage der Zonenplatte 11 bezüglich dem Fokus des Interferometerobjektivs (intrafokal, extrafokal bzw. im Fokus), die hochgestellten Indizes 0 bzw. $\Pi$ beziehen sich auf die azimutale Orientierung der Zonenplatte 11. Die Absolutmessung der Zonenplatte liefert die Fehler der sphärischen Hilfswelle durch Hologrammverzeichnung $W_{PD1}$ und die Passfehler des Trägersubstrates $W_{PASS1}$ in absoluter Weise:

$$W^0_{PD1\,if} = \frac{1}{4} \, (W^0_{\;if} + \overline{W}^{\bar{\pi}}_{\;if} - \overline{W}^{\bar{0}}_{\;ef} - W^{\pi}_{\;ef})$$

$$W^{\pi}_{PD1\,ef} = \frac{1}{4} \, (\overline{W^0_{ef}} + W^{\pi}_{ef} - W^0_{if} - \overline{W^{\pi}_{if}})$$

und

$$W_{PASS1} = W^0_{PASSif} = W^{\pi}_{PASSef}$$

$$= \frac{1}{4} \, (W^0_{if} + \overline{W^{\pi}_{if}} + \overline{W^0_{ef}} + W^{\pi}_{ef}) - \frac{1}{2} \, (W_F + \overline{W}_F).$$

Der Querbalken weist auf eine Rotation der Wellenfront um 180° hin.

Die Absolutergebnisse des als Zonenplatte betriebenen Twin-CGH 11 werden mit Hilfe der weiter oben in Verbindung mit Gleichung (1) beschriebenen Prozedur über den Positionierungsfehler des Schreibstrahles in die Fehler $W_{PD2}$ und $W_{PASS2}$ der asphärischen Welle des als diffraktives Normal einsetzbaren Twin-CGHs 11 umgerechnet. Weiterhin muss eine Verzeichnungskorrektur vorgenommen werden, damit eine eindeutige Zuordnung zwischen den Pixelkoordinaten der CCD-Kamera 6 (vgl. Fig. 1) und den Twin-CGH-Koordinaten entsteht. Die verzeichnungskorrigierten Wellenfronten sind im Folgenden mit $W'_{PD2}$, $W'_{PASS2}$ und $W'_{CGH2}$ bezeichnet.

Als sechste Messung erfolgt die Messung mit dem Twin-CGH 11 als diffraktives Normal zur Kalibrierung eines diffraktiven Kompensationssystems 7 (Fig. 3b):

$$W_6 \quad = \quad W_{INT} + W'_{PD2} + W'_{PASS2}$$

$$= \quad W_{INT} + W'_{CGH2}.$$

Die zuvor bestimmten Aberrationen des Normals $W'_{PD2}$ und $W'_{PASS2}$ werden von dem Messergebnis abgezogen, so dass der verbleibende Interferometerfehler $W_{INT}$ erhalten wird, der sich aus dem Fehler der Referenzfläche und dem des im vorliegenden Falle hybrid ausgebildeten Kompensationssystems 16 und 7 zusammensetzt.

Als Letztes erfolgt die Messung der Asphäre 8 mit dem hybriden Kompensationssystem 16 und 7 (Fig. 3c):

$$W_7 = W_{INT} + W_{ASPH}.$$

Da der gesamte Interferometerfehler $W_{INT}$ nun bekannt ist, kann der Wellenfront-Oberflächenfehler der Asphäre $W_{ASPH}$ von den systematischen Fehlern des Prüfaufbaus getrennt werden:

$$W_{ASPH} = W_7 - W_6 + W'_{CGH2}.$$

Wie bei jeder interferometrischen Asphärenmessung mit Kompensationssystemen muss der Justagezustand der Asphäre sowohl bei diesem als auch beim vorangehenden Beispiel berücksichtigt werden, damit die Justagefehler von den Oberflächenfehlern getrennt werden können. Die Justagefehler können jedoch durch die beschriebenen Verfahren ermittelt und eliminiert werden. Um eine exakte Zuordnung von CCD-Pixelkoordinaten und Asphärenkoordinaten zu erzielen, muss weiterhin eine Verzeichnungskorrektur erfolgen. Beides sind jedoch generelle Probleme bei der Asphärenmessung mit Kompensationssystemen, welche bekannt und gelöst sind.

Neben dem Asphärenfehler erhält man mit der angegebenen Prozedur auch den Interferometerfehler $W_{INT}$, wenn für die Kalibrierprozedur des Twin-CGH 11 im Zonenplatten-Modus das Objektiv 16 verwendet wird, welches in der Messprozedur der Asphäre zusammen mit dem diffraktiven Kompensationssystem 7 als hybrides Kompensationssystem 16 und 7 eingesetzt wird. Der Interferometerfehler $W_{INT}$ setzt sich dann aus den Anteilen der Objektiv- und Referenzfehler $W_O$ und $W_R$ sowie aus denen des Kompensations-CGHs 7 $W_{NULL}$ zusammen:

$$W_{INT} = W_O + W_R + W_{NULL}$$

Der Interferometerfehler inklusive des Fehlers der Kompensationsoptik ergibt sich zu:

$$W_{INT} = W_6 - W'_{CGH2}.$$

Da die Summe von $W_O$ und $W_R$ aus dem Absoluttest der Zonenplatte 11 bekannt ist:

$$(W_O + W_R)^0 = \frac{1}{4} \, (W_{if}^0 - \overline{W_{if}^\pi} + W_{ef}^\pi - \overline{W_{ef}^0}) + \frac{1}{2} \, (W_F + \overline{W_F})$$

kann auch der Fehler des Kompensations-CGHs 7 bestimmt werden:

$$W_{NULL} = W_6 - W'_{CGH2} - W_O - W_R.$$

Fig. 5 zeigt schließlich ein Beispiel für die Ausgestaltung eines beim vorliegenden Verfahren einsetzbaren Twin-CGHs 14, das nicht als Reflexions-CGH, wie dies beispielsweise bei dem vorangehend beschriebenen Verfahren der Fall sein kann, sondern als Transmissions-CGH ausgebildet ist. Analog zu einer Zonenlinse wird die einfallende Welle hierbei zunächst in eine Planwelle transformiert, die dann an der Rückseite 15 des CGH-Substrates reflektiert wird und wieder in sich zurückläuft. Die für einen Nulltest notwendige Strahlablenkung kann somit auf zwei Beugungsvorgänge verteilt werden. Diese Ausgestaltung ermöglicht es, die erforderliche CGH-Liniendichte des diffraktiven Absolutnormals um einen Faktor 2 gegenüber einem rein reflektiven CGH zu reduzieren. CGHs mit geringerer Liniendichte lassen sich einfacher herstellen als CGHs mit einer hohen Liniendichte.

**BEZUGSZEICHENLISTE**

| 1 | Laser |
|---|---|
| 2 | Aufweitungsoptik |
| 3 | Strahlteiler |
| 4 | Referenzplanspiegel |
| 5 | Teleskopoptik |
| 6 | CCD-Kamera |
| 7 | Kompensationselement, z.B. CGH |
| 8 | Zu prüfende Oberfläche / Asphäre |
| 9 | Wellenfront |
| 10 | Sphärischer Spiegel |
| 11 | Twin-CGH als Absolutnormal |

(fortgesetzt)

| 12 | Twin-CGH als diffraktives Kompensationselement |
|---|---|
| 13 | Position des Kugelspiegels |
| 14 | Transmissions-CGH |
| 15 | Rückseite des CGH-Substrates |
| 16 | Optik zur Erzeugung einer sphärischen Ausgangswelle / Objektiv |

**Patentansprüche**

1. Verfahren zur Kalibrierung eines diffraktiven Kompensations- oder Absolutnormal-Elementes für eine interferometrische Absolutprüfung asphärischer Oberflächen, bei dem ein komplex kodiertes computergeneriertes Hologramm (11, 12), das sowohl eine asphärische Welle, die für eine interferometrische Vermessung der zu prüfenden asphärischen Oberfläche (8) oder Wellenfront geeignet ist, als auch eine sphärische Hilfswelle rekonstruiert, als Kompensations- bzw. Absolutnormal-Element bereitgestellt und auf Basis der sphärischen Hilfswelle interferometrisch vermessen wird, um durch das computergenerierte Hologramm (11, 12) hervorgerufene Wellenfrontfehler der sphärischen Hilfswelle zu bestimmen,
**dadurch gekennzeichnet,**
**dass** aus den durch das computergenerierte Hologramm (11, 12) hervorgerufenen Wellenfrontfehlern der sphärischen Hilfswelle Positionierungsfehler eines Schreibstrahls bei der Herstellung des computergenerierten Hologrammes (11, 12) ermittelt und aus den Positionierungsfehlern die zu erwartenden Wellenfrontfehler der asphärischen Welle berechnet und als Kalibrierung herangezogen werden.

2. Verfahren nach Anspruch 1,
**dadurch gekennzeichnet,**
**dass** die interferometrische Vermessung des computergenerierten Hologrammes (11, 12) zur Bestimmung der durch das computergenerierte Hologramm (11, 12) hervorgerufenen Wellenfrontfehler der sphärischen Hilfswelle mit einem diffraktiven Absolutkalibrierverfahren für Fresnelsche Zonenplatten erfolgt.

3. Verfahren nach Anspruch 1 oder 2,
**dadurch gekennzeichnet,**
**dass** das komplex kodierte computergenerierte Hologramm (11) in Reflexion interferometrisch vermessen wird.

4. Verfahren nach Anspruch 3,
bei dem das komplex kodierte computergenerierte Hologramm (11) als Transmissionshologramm (14) mit einer reflektierenden Rückfläche (15) für einen doppelten Durchgang ausgebildet ist.

5. Verfahren nach Anspruch 3 oder 4,
bei dem das komplex kodierte computergenerierte Hologramm (11) zur Absolutkalibrierung eines interferometrischen Nulltest-Aufbaus für die Prüfung der asphärischen Oberfläche (8) eingesetzt wird.

6. Verfahren nach einem der Ansprüche 1 bis 5,
**dadurch gekennzeichnet,**
**dass** die interferometrische Vermessung des computergenerierten Hologrammes (11) zur Bestimmung der durch das computergenerierte Hologramm (11) hervorgerufenen Wellenfrontfehler der sphärischen Hilfswelle zumindest folgende in beliebiger Reihenfolge ausführbare Schritte beinhaltet:

- Anordnen des computergenerierten Hologrammes (11) als reflektierendes Abschlusselement eines Messarmes eines Interferometers mit sphärischer Ausgangswelle in einer intrafokalen Position;
- erste interferometrische Vermessung des computergenerierten Hologrammes (11) in dieser Position;
- Drehen des computergenerierten Hologrammes (11) um 180° um seine rotationssymmetrische Achse;
- zweite interferometrische Vermessung des computergenerierten Hologrammes (11) in dieser Position;
- Anordnen des computergenerierten Hologrammes (11) als reflektierendes Abschlusselement des Messarmes in einer extrafokalen Position;
- dritte interferometrische Vermessung des computergenerierten Hologrammes (11) in dieser Position;

- Drehen des computergenerierten Hologrammes (11) um 180° um seine rotationssymmetrische Achse;
- vierte interferometrische Vermessung des computergenerierten Hologrammes (11) in dieser Position;
- Anordnen des computergenerierten Hologrammes (11) als reflektierendes Abschlusselement des Messarmes in der Katzenaugenposition, in der das computergenerierte Hologramm (11) mit dem Brennpunkt der sphärischen Ausgangswelle zusammenfällt; und
- fünfte interferometrische Vermessung des computergenerierten Hologrammes (11) in dieser Position.

7. Verfahren nach Anspruch 6,
**dadurch gekennzeichnet,**
**dass** die interferometrische Vermessung des computergenerierten Hologrammes (11) ein oder mehrere weitere Schritte beinhaltet, bei denen das computergenerierte Hologramm (11) in weiteren Drehwinkelstellungen zwischen 0° und 360° in der intrafokalen und/oder extrafokalen Position interferometrisch vermessen wird.

8. Verfahren nach Anspruch 1 oder 2,
**dadurch gekennzeichnet,**
**dass** das komplex kodierte computergenerierte Hologramm (12) in Transmission interferometrisch vermessen wird.

9. Verfahren nach Anspruch 8,
bei dem das komplex kodierte computergenerierte Hologramm (12) als Kompensationselement im Null-Modus in einem Interferometer für die Prüfung der asphärischen Oberfläche (8) eingesetzt wird.

10. Verfahren nach Anspruch 8 oder 9,
**dadurch gekennzeichnet,**
**dass** die interferometrische Vermessung des computergenerierten Hologrammes (12) zur Bestimmung der durch das computergenerierte Hologramm (12) hervorgerufenen Wellenfrontfehler der sphärischen Hilfswelle zumindest folgende in beliebiger Reihenfolge ausführbare Schritte beinhaltet:

- Einbringen des computergenerierten Hologrammes (12) in einen Messarm eines Interferometers, der durch einen Kugelspiegel (10) abschließt, in einer konfokalen Position, so dass der Krümmungsmittelpunkt des Kugelspiegels (10) mit einem reellen Brennpunkt der sphärischen Hilfswelle zusammenfällt;
- erste interferometrische Vermessung des computergenerierten Hologrammes (12) in dieser Position;
- Drehen des Kugelspiegels (10) um 180° um seine rotationssymmetrische Achse;
- zweite interferometrische Vermessung des computergenerierten Hologrammes (12) in dieser Position;
- Anordnen des Kugelspiegels (10) oder des computergenerierten Hologrammes (12) derart, dass der Scheitel des Kugelspiegels (10) mit dem Brennpunkt der sphärischen Hilfswelle zusammenfällt;
- dritte interferometrische Vermessung des computergenerierten Hologrammes (12) in dieser Position; und
- Anordnen des Kugelspiegels (10) oder des computergenerierten Hologrammmes (12) in einer weiteren konfokalen Position, so dass der Krümmungsmittelpunkt des Kugelspiegels (10) mit einem virtuellen Brennpunkt der sphärischen Hilfswelle zusammenfällt; und
- vierte interferometrische Vermessung des computergenerierten Hologrammes (12) in dieser Position.

11. Verfahren nach Anspruch 10,
**dadurch gekennzeichnet,**
**dass** die interferometrische Vermessung des computergenerierten Hologrammes (12) ein oder mehrere weitere Schritte beinhaltet, bei denen das computergenerierte Hologramm (12) in weiteren Drehwinkelstellungen zwischen 0° und 360° relativ zum Kugelspiegel (10) in einer oder mehreren konfokalen Positionen interferometrisch vermessen wird.

12. Verfahren nach einem der Ansprüche 1 bis 11, bei dem das komplex kodierte computergenerierte Hologramm (11, 12) als Inline-Hologramm ausgebildet ist.

13. Verfahren nach einem der Ansprüche 1 bis 11, bei dem das komplex kodierte computergenerierte Hologramm (11, 12) als Off-axis-Hologramm ausgebildet ist.

14. Verfahren nach einem der Ansprüche 1 bis 11, bei dem das komplex kodierte computergenerierte Hologramm (11, 12) als eine Kombination von Inline- und Off-axis-Hologramm ausgebildet ist.

**15.** Verfahren nach einem der Ansprüche 1 bis 14, bei dem das komplex kodierte computergenerierte Hologramm (11, 12) für eine Rekonstruktion der asphärischen Welle in der +/- 1. Beugungsordnung ausgebildet ist.

**16.** Verfahren nach einem der Ansprüche 1 bis 14, bei dem das komplex kodierte computergenerierte Hologramm (11, 12) für eine Rekonstruktion der asphärischen Welle in einer höheren als der +/- 1. Beugungsordnung ausgebildet ist.

**17.** Verfahren nach einem der Ansprüche 1 bis 16,
**dadurch gekennzeichnet,**
**dass** das Verhältnis der Amplituden von asphärischer Welle und sphärischer Hilfswelle ungleich 1 gewählt ist.

**18.** Verfahren nach einem der Ansprüche 1 bis 17,
**dadurch gekennzeichnet,**
**dass** das komplex kodierte computergenerierte Hologramm (11, 12) mit einer Laser- oder Elektronenstrahltechnik hergestellt wird.

**19.** Verfahren nach einem der Ansprüche 1 bis 18,
**dadurch gekennzeichnet,**
**dass** bei der interferometrischen Vermessung des computergenerierten Hologrammes (11, 12) zur Bestimmung der durch das computergenerierte Hologramm (11, 12) hervorgerufenen Wellenfrontfehler der sphärischen Hilfswelle auch durch das eingesetzte Interferometer hervorgerufene Wellenfrontfehler bestimmt werden.

Fig. 1

Fig. 2

Fig. 3

Fig. 5

Fig. 4

**Europäisches Patentamt**

# EUROPÄISCHER RECHERCHENBERICHT

Nummer der Anmeldung

EP 01 12 8393

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| A,D | A.F. FERCHER: "Computer generated holograms for testing optical elements: Error analysis and error compensation" OPTICA ACTA, Bd. 23, Nr. 5, 1976, Seiten 347-365, XP001027067 * Seite 364, Zeile 14 – Zeile 17; Abbildung 8 * ----- | 1 | G01M11/00 |
| | | | **RECHERCHIERTE SACHGEBIETE (Int.Cl.7)** G01M |

Der vorliegende Recherchenbericht wurde für alle Patentansprüche erstellt

| Recherchenort | Abschlußdatum der Recherche | Prüfer |
|---|---|---|
| MÜNCHEN | 16. April 2002 | Mielke, W |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
..............................................................................
& : Mitglied der gleichen Patentfamilie, übereinstimmendes Dokument